# EUROPÄISCHE PATENTANMELDUNG

(11) **EP 4 660 489 A1**
(43) Veröffentlichungstag der Anmeldung: **10.12.2025**
(21) Anmeldenummer: 25181051.1
(22) Anmeldetag: 05.06.2025
(51) Int. Cl.: F16K 3/314, F16K 5/04, F16K 11/076, F16K 11/085

(54) **FLUIDVERTEILUNGSANORDNUNG**

(30) Priorität: 07.06.2024 DE 102024115992
(71) Anmelder: HDT Veritas Hessen GmbH, 63571 Gelnhausen (DE)
(72) Erfinder: HATTASS, Dirk, 63584 Gründau (DE); WERTH, Josef, 63571 Gelnhausen (DE); KARI, Artur, 63762 Großostheim (DE)
(74) Vertreter: Patentship Patentanwaltsgesellschaft mbH

(57) **Zusammenfassung**

Fluidverteilungsanordnung (100) umfassend: zumindest zwei Fluidführungen (107, 107-1, 107-2, 107-3, 107-4), welche ausgebildet sind, Fluid zu führen; ein Ventilgehäuse (101), welches einen Gehäuseinnenraum (103) begrenzt, wobei das Ventilgehäuse (101) zumindest zwei Gehäuseöffnungen (105, 105-1, 105-2, 105-3, 105-4) aufweist, welche jeweils den Gehäuseinnenraum (103) mit einer der zumindest zwei Fluidführungen (107, 107-1, 107-2, 107-3, 107-4) fluidtechnisch verbinden; zumindest eine Dichtungsanordnung (117, 117-1, 117-2, 117-3, 117-4), welche in jeweils einer der zumindest zwei Gehäuseöffnungen (105, 105-1, 105-2, 105-3, 105-4) angeordnet ist; und einen Ventilkolben (111), welcher um eine Drehachse (110) drehbar in dem Gehäuseinnenraum (103) angeordnet ist, wobei der Ventilkolben (111) eine dem Ventilgehäuse (101) zugewandte Kolbenaußenwand (119) aufweist, wobei sich die Kolbenaußenwand (119) von einer Kolbenunterseite (121) zu einer Kolbenoberseite (112) des Ventilkolbens (111) erstreckt und ausgebildet ist, zumindest eine der zumindest zwei Gehäuseöffnungen (105, 105-1, 105-2, 105-3, 105-4) in Abhängigkeit von einer Kolbenstellung des Ventilkolbens (111) zumindest teilweise fluidtechnisch zu sperren, wobei der Ventilkolben (111) eine Wandungsaussparung (123) aufweist, welche dem Ventilgehäuse (101) zugewandt ist, und welche ausgebildet ist, zumindest eine der zumindest zwei Gehäuseöffnungen (105, 105-1, 105-2, 105-3, 105-4) in Abhängigkeit einer Kolbenstellung des Ventilkolbens (111) zumindest teilweise fluidtechnisch freizugeben, wobei die Kolbenaußenwand (119) durch einen ersten abgerundeten Wandungsrand (125) und zweiten abgerundeten Wandungsrand (127) von der Wandungsaussparung (123) abgegrenzt ist, wobei sich der erste und zweite Wandungsrand (125, 127) jeweils zumindest abschnittsweise entlang einer Wandungsrandsachse (129) erstrecken, wobei sich die Wandungsrandsachse (129) winklig zur Drehachse (110) des Ventilkolbens (111) erstreckt, und wobei der erste und zweite abgerundete Wandungsrand (125, 127) ausgebildet sind, bei einer Rotation des Ventilkolbens (111) über die zumindest eine Dichtungsanordnung (117, 117-1, 117-2, 117-3, 117-4) zu streichen.

## Beschreibung

Die vorliegende Erfindung betrifft eine Fluidverteilungsanordnung.

In herkömmlichen Batteriekühlungssystemen von elektrisch angetriebenen Fahrzeugen werden die Batteriezellen mittels thermisch gekoppelter Fluidleitungen temperiert, durch welche ein Wasser-Glykol-Gemisch zirkuliert wird. Um die Führung des Fluids durch entsprechende Fluidleitungen zu steuern, werden Fluidverteilungsanordnungen verwendet, in welchen Fluidventile zur Schaltung der Strömungswege vorhanden sind, um je nach Temperierungsbedarf das Wasser-Glykol-Gemisch zu einem bestimmten Bereich der zu temperierenden Batteriezellen zu leiten.

Herkömmliche Fluidventile in herkömmlichen Fluidverteilungsanordnungen sind jedoch in der Regel auf die Verwendung eines Wasser-Glykol-Gemisches in einem indirekten Kühlungssystem ausgelegt, und nicht auf eine entsprechende direkte Kühlung in einem Immersionskühlungssystem, welches beispielsweise bisher lediglich für eine besonders wirksame Prozessorkühlung in einem Computer bekannt ist, und in welchem andere Kühlmittel wie beispielsweise dielektrische Öle verwendet werden. Für die Verwendung eines Immersionskühlungssystems zur Temperierung von Batteriezellen in einem elektrisch angetriebenen Fahrzeug können herkömmliche Fluidverteilungsanordnungen nicht verwendet werden, da vollkommen unterschiedliche Leitungsquerschnitte und Eigenschaften der Ventilschaltung notwendig sind.

In der Druckschrift DE 10 2021 108 799.6 A1 ist lediglich ein Fluidventil in einer Fluidführung von herkömmlichen Wasser-Glykol-Gemischen beschrieben.

Es ist die der Erfindung zugrundeliegende Aufgabe, eine Fluidverteilungsanordnung anzugeben, welche in einem Immersionskühlsystem verwendet werden kann.

Diese Aufgabe wird durch die Gegenstände mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch eine Fluidverteilungsanordnung gelöst, umfassend: zumindest zwei Fluidführungen, welche ausgebildet sind, Fluid zu führen; ein Ventilgehäuse, welches einen Gehäuseinnenraum begrenzt, wobei das Ventilgehäuse zumindest zwei Gehäuseöffnungen aufweist, welche jeweils den Gehäuseinnenraum mit einer der zumindest zwei Fluidführungen fluidtechnisch verbinden; zumindest eine Dichtungsanordnung, welche in jeweils einer der zumindest zwei Gehäuseöffnungen angeordnet ist; und einen Ventilkolben, welcher um eine Drehachse drehbar in dem Gehäuseinnenraum angeordnet ist, wobei der Ventilkolben eine dem Ventilgehäuse zugewandte Kolbenaußenwand aufweist, wobei sich die Kolbenaußenwand von einer Kolbenunterseite zu einer Kolbenoberseite des Ventilkolbens erstreckt und ausgebildet ist, zumindest eine der zumindest drei Gehäuseöffnungen in Abhängigkeit von einer Kolbenstellung des Ventilkolbens zumindest teilweise fluidtechnisch zu sperren, wobei der Ventilkolben eine Wandungsaussparung aufweist, welche dem Ventilgehäuse zugewandt ist, und welche ausgebildet ist, zumindest eine der zumindest drei Gehäuseöffnungen in Abhängigkeit einer Kolbenstellung des Ventilkolbens zumindest teilweise fluidtechnisch freizugeben, wobei die Kolbenaußenwand durch einen ersten abgerundeten Wandungsrand und zweiten abgerundeten Wandungsrand von der Wandungsaussparung abgegrenzt ist, wobei sich der erste und zweite Wandungsrand jeweils zumindest abschnittsweise entlang einer Wandungsrandsachse erstrecken, wobei sich die Wandungsrandsachse winklig zur Drehachse des Ventilkolbens erstreckt, und wobei der erste und zweite abgerundete Wandungsrand ausgebildet sind, bei einer Rotation des Ventilkolbens über die zumindest eine Dichtungsanordnung zu streichen.

Insbesondere ist die Fluidverteilungsanordnung gemäß dem Aspekt als eine Fahrzeugfluidverteilungsanordnung ausgebildet. Die Fahrzeugfluidverteilungsanordnung ist eine Anordnung, welche ausgebildet ist, Fluid in einem Fahrzeug, insbesondere in einem elektrisch angetriebenen Fahrzeug, zu verteilen. Insbesondere ist die Fahrzeugfluidverteilungsanordnung als eine Batteriekühlungsfluidverteilungsanordnung ausgebildet, welche ausgebildet ist, Batteriekühlungsfluid, insbesondere ein dielektrisches Öl, in einem Fahrzeug, insbesondere in einem elektrisch angetriebenen Fahrzeug, zu verteilen.

Insbesondere sind die Fluidführungen als Fluidführungskanäle ausgebildet.

Dadurch wird beispielsweise der technische Vorteil erreicht, dass bei einer Rotation des Ventilkolbens in dem Gehäuseinnenraum des Ventilgehäuses, der erste, bzw. zweite abgerundete Wandungsrand vorteilhaft über die zumindest eine Dichtungsanordnung streichen kann, so dass die Verformung der Dichtungsanordnung begrenzt wird, wodurch ein Umschlagen der Dichtungsanordnung an der jeweiligen Gehäuseöffnung verhindert wird.

Dies wird insbesondere dadurch erreicht, dass sich die Wandungsrandsachse des ersten, bzw. zweiten Wandungsrands winklig zur Drehachse des Ventilkolbens erstreckt, was einer gegenüber der Drehachse des Ventilkolbens schrägen Erstreckungsrichtung des ersten, bzw. zweiten Wandungsrands entspricht.

Dadurch werden bei einer Rotation des Ventilkolbens die aufgrund des dichtenden Kontakts zwischen dem Ventilkolben und der Dichtungsanordnung auftretenden Stellungskräfte signifikant reduziert, was aufgrund der daraus resultierenden begrenzten Verformung der Dichtungsanordnung dazu führt, dass eine wirksame Abdichtung der entsprechenden Gehäuseöffnung erreicht wird, welche auch über eine lange Betriebsdauer der Fluidverteilungsanordnung sichergestellt werden kann. Zudem stellt die begrenzte Verformung der Dichtungsanordnung sicher, dass das verformbare Material der Dichtungsanordnung nicht ermüdet.

Die Fahrzeugfluidverteilungsanordnung umfasst insbesondere eine Mehrwege-Fluidverteilungsanordnung, welche zumindest zwei Gehäuseöffnungen, insbesondere eine Mehrzahl von Gehäuseöffnungen, insbesondere, zwei, drei, vier, fünf, sechs, sieben, acht, neun oder zehn Gehäuseöffnungen aufweist. Insbesondere beträgt die Anzahl der Gehäuseöffnungen vier.

Die Fahrzeugfluidverteilungsanordnung umfasst zumindest eine Dichtungsanordnung, insbesondere eine, zwei, drei, vier, fünf, sechs, sieben, acht, neun oder zehn Dichtungsanordnungen. Insbesondere beträgt die Anzahl der Dichtungsanordnungen vier.

Der Ventilkolben der Fluidverteilungsanordnung, insbesondere der Mehrwege-Fluidverteilungsanordnung, ist drehbar in dem Gehäuseinnenraum angeordnet und kann, insbesondere durch einen Elektromotor der Fluidverteilungsanordnung, in unterschiedliche Kolbenstellungen gedreht werden.

Der Ventilkolben der Fluidverteilungsanordnung ist ausgebildet, in Abhängigkeit der Kolbenstellung des Ventilkolbens die zumindest zwei Gehäuseöffnungen zumindest teilweise fluidtechnisch zu sperren oder zumindest teilweise fluidtechnisch freizugeben.

Eine zumindest teilweise fluidtechnische Freigabe von zumindest zwei der zumindest zwei Gehäuseöffnungen kann durch den Ventilkolben insbesondere dadurch erreicht werden, dass die freizugebenden zwei Gehäuseöffnungen durch einen durch den Ventilkolben nicht versperrten Bereich des Gehäuseinnenraums des Ventilgehäuses miteinander zumindest teilweise fluidtechnisch verbunden werden. Eine zumindest teilweise fluidtechnische Freigabe umfasst eine vollständige oder teilweise Freigabe der jeweiligen Gehäuseöffnungen durch den Ventilkolben.

Ein zumindest teilweise fluidtechnisches Sperren von zumindest einer der zumindest zwei Gehäuseöffnungen kann durch den Ventilkolben insbesondere dadurch erreicht werden, dass die zumindest eine Gehäuseöffnung durch den Ventilkolben, insbesondere durch die Kolbenaußenwand des Ventilkolbens, fluidtechnisch verschlossen wird. Ein zumindest teilweises fluidtechnisches Sperren umfasst ein vollständiges oder teilweises Verschließen der zumindest einen Gehäuseöffnung durch den Ventilkolben, insbesondere durch die Kolbenaußenwand des Ventilkolbens.

Wenn das Ventilgehäuse jedoch mehr als zwei, insbesondere drei, vier, fünf, sechs, sieben, acht, neun oder zehn Gehäuseöffnungen aufweist, kann der Ventilkolben in einer Kolbenstellung des Ventilkolbens eine erste Untergruppe von mindestens einer Gehäuseöffnung der mehr als zwei Gehäuseöffnungen zumindest teilweise fluidtechnisch sperren und eine zweite Untergruppe von zwei oder mehr Gehäuseöffnungen der mehr als zwei Gehäuseöffnungen zumindest teilweise fluidtechnisch freigeben, bzw. kann der Ventilkolben in einer anderen Kolbenstellung des Ventilkolbens die erste Untergruppe von mindestens einer Gehäuseöffnung der mehr als zwei Gehäuseöffnungen zumindest teilweise fluidtechnisch freigeben und die zweite Untergruppe von zwei oder mehr Gehäuseöffnungen der mehr als zwei Gehäuseöffnungen zumindest teilweise fluidtechnisch sperren.

Gemäß einer Ausführungsform weist der Ventilkolben eine Kolbeninnenwand auf, welche die Kolbenunterseite mit der Kolbenoberseite verbindet, und welche sich von dem ersten abgerundeten Wandungsrand zu dem zweiten abgerundeten Wandungsrand erstreckt, wobei insbesondere die Kolbeninnenwand der Wandungsaussparung zugewandt ist, und mit dem Ventilgehäuse einen fluidführenden Bereich des Gehäuseinnenraums begrenzt.

Dadurch wird der technische Vorteil erreicht, dass die beiden abgerundeten Wandungsränder eine wirksame Abgrenzung zwischen der Kolbeninnenwand und der Kolbenaußenwand darstellen. Wenn die Kolbenaußenwand in der entsprechenden Kolbenstellung die entsprechende Gehäuseöffnung abdeckt, wird die entsprechende Gehäuseöffnung fluidtechnisch gesperrt. Wenn die Kolbeninnenwand in der entsprechenden Kolbenstellung der entsprechenden Gehäuseöffnung zugewandt ist, dann gibt der entsprechende, durch die Kolbeninnenwand begrenzte, fluidführende Bereich die entsprechende Gehäuseöffnung fluidtechnisch frei.

Insbesondere erstreckt sich die Kolbeninnenwand zumindest abschnittsweise entlang einer Kolbeninnenwandungsachse, welche sich parallel zu der Wandungsrandsachse erstreckt.

Gemäß einer Ausführungsform ist die Kolbenunterseite einer unteren Bodenwand des Ventilgehäuses zugewandt, wobei die Kolbenoberseite eine Kolbenoberseiteninnenwand aufweist, welche der unteren Bodenwand des Ventilgehäuses zugewandt ist, und welche von der unteren Bodenwand des Ventilgehäuses beabstandet ist, wobei insbesondere sich die Kolbeninnenwand von dem ersten abgerundeten Wandungsrand und von dem zweiten abgerundeten Wandungsrand und von der Kolbenunterseite zu der Kolbenoberseiteninnenwand erstreckt.

Dadurch wird der technische Vorteil erreicht, dass die Kolbenoberseiteninnenwand, welche der unteren Bodenwand des Ventilgehäuses zugewandt ist, eine wirksame oberseitige Abgrenzung des durch den Ventilkolben und durch das Ventilgehäuse begrenzten fluidführenden Bereichs ermöglicht.

Insbesondere erstreckt sich die Kolbenoberseiteninnenwand von der Kolbeninnenwand, insbesondere von einem der Kolbenoberseite zugewandten oberen Bereich der Kolbeninnenwand, in Richtung des Ventilgehäuses.

Gemäß einer Ausführungsform ist die Kolbenunterseite einer unteren Bodenwand des Ventilgehäuses zugewandt, wobei die Kolbenoberseite eine Kolbenoberseitenaussparung aufweist, welche von der unteren Bodenwand des Ventilgehäuses beabstandet ist, wobei insbesondere sich die Kolbeninnenwand von dem ersten abgerundeten Wandungsrand und von dem zweiten abgerundeten Wandungsrand und von der Kolbenunterseite zu einem Kolbenoberseitenwandrand erstreckt, welcher die Kolbeninnenwand von der Kolbenoberseitenaussparung abgrenzt.

Dadurch wird der technische Vorteil erreicht, dass der Verzicht auf die Kolbenoberseiteninnenwand und das stattdessen vorgesehene Einbringen der Kolbenoberseitenaussparung die Dimensionen des Ventilkolbens verkleinern.

Aufgrund der durch die Kolbenoberseitenaussparung bedingten fluidtechnisch offenen Oberseite des Gehäuseinnenraums ist in diesem Fall insbesondere eine fluidtechnische Abdichtung durch einen Gehäusedeckel der Fluidverteilungsanordnung sichergestellt, welcher mit dem Ventilgehäuse fluiddicht, insbesondere stoffschlüssig, verbunden ist.

Gemäß einer Ausführungsform weisen der erste Wandungsrand und der zweite Wandungsrand jeweils einen mittleren Randbereich auf, welcher mit der Kolbenaußenwand, der Kolbenunterseite, der Kolbenoberseite, und insbesondere der Kolbeninnenwand verbunden ist, wobei sich der mittlere Randbereich entlang der Wandungsrandsachse erstreckt.

Dadurch wird der technische Vorteil erreicht, dass der sich entlang der Wandungsrandsachse von der Kolbenunterseite zu der Kolbenoberseite erstreckende mittlere Randbereich des ersten, bzw. zweiten Wandungsrands sicherstellen, dass eine wirksame Schrägstellung des mittigen Randbereichs gegenüber der Drehachse des Ventilkolbens erreicht wird.

Insbesondere erstreckt sich der mittlere Randbereich gerade von der Kolbenunterseite zu der Kolbenoberseite entlang der Wandungsrandsachse.

Gemäß einer Ausführungsform weisen der erste Wandungsrand und der zweite Wandungsrand jeweils einen unteren Randbereich, einen mittleren Randbereich und einen oberen Randbereich auf, wobei der untere Randbereich mit der Kolbenaußenwand, der Kolbenunterseite und dem mittleren Randbereich, und insbesondere der Kolbeninnenwand verbunden ist, wobei der obere Randbereich mit der Kolbenaußenwand, der Kolbenoberseite, und dem mittleren Randbereich, und insbesondere der Kolbeninnenwand, verbunden ist, wobei der mittlere Randbereich mit der Kolbenaußenwand, dem unteren Randbereich, und dem oberen Randbereich, und insbesondere der Kolbeninnenwand verbunden ist, wobei sich der mittlere Randbereich entlang der Wandungsrandsachse erstreckt.

Dadurch wird der technische Vorteil erreicht, dass die entsprechende Schrägstellung der jeweiligen Wandungsränder in Bezug auf die Erstreckungsrichtung der Wandungsrandachse nur im mittleren Randbereich erreicht werden muss, da der Kontakt zwischen dem jeweiligen Wandungsrand und der jeweiligen Dichtungsanordnung lediglich im mittleren Randbereich des jeweiligen Wandungsrands erreicht werden muss.

Insbesondere erstreckt sich der jeweilige untere Randbereich entlang einer ersten Bereichsachse und erstreckt sich der jeweilige obere Randbereich entlang einer zweiten Bereichsachse, wobei sich die erste und/oder zweite Bereichsachse nicht parallel zu der jeweiligen Wandungsrandachse des mittleren Randbereichs erstrecken, wobei sich die erste Bereichsachse und/oder die zweite Bereichsachse insbesondere parallel oder winklig zur Drehachse des Ventilkolbens erstrecken.

Insbesondere ist der untere Randbereich als ein unterer gekrümmter Randbereich ausgebildet, insbesondere als ein unterer konkav gekrümmter Randbereich.

Insbesondere ist der obere Randbereich als ein oberer gekrümmter Randbereich ausgebildet, welcher insbesondere als ein oberer konvex gekrümmter Randbereich oder als ein oberer konvex und konkav gekrümmter Randbereich ausgebildet ist.

Insbesondere ist der untere Randbereich von dem oberen Randbereich entlang einer sich orthogonal zur Drehachse erstreckenden x-y-Ebene versetzt, und/oder ist der untere Randbereich von dem oberen Randbereich entlang der Drehachse versetzt.

Insbesondere weist die Kolbeninnenwand einen unteren Innenwandbereich, einen mittleren Innenwandbereich und oberen Innenwandbereich auf. Hierbei erstreckt sich der untere Innenwandbereich insbesondere parallel zu dem unteren Randbereich des ersten, bzw. zweiten Wandungsrands. Hierbei erstreckt sich der mittlere Innenwandbereich insbesondere parallel zu dem mittleren Randbereich des ersten, bzw. zweiten Wandungsrands. Hierbei erstreckt sich der obere Innenwandbereich insbesondere parallel zu dem oberen Randbereich des ersten, bzw. zweiten Wandungsrands.

Insbesondere ist der untere Innenwandbereich mit dem mittleren Innenwandbereich, mit der Kolbenunterseite und dem unteren Randbereich des ersten und zweiten Wandungsrands verbunden.

Insbesondere ist der obere Innenwandbereich mit dem mittleren Innenwandbereich, mit der Kolbenoberseite, insbesondere der Kolbenoberseiteninnenwand, und dem oberen Randbereich des ersten und zweiten Wandungsrands verbunden.

Insbesondere ist der mittlere Innenwandbereich mit dem unteren Innenwandbereich, mit dem oberen Innenwandbereich und mit dem mittleren Randbereich des ersten und zweiten Wandungsrands verbunden, wobei sich der mittlere Innenwandbereich entlang einer Kolbeninnenwandungsachse erstreckt, welche insbesondere parallel zu Wandungsrandachse des ersten und zweiten Wandungsrands verläuft.

Insbesondere erstreckt sich der untere Innenwandbereich entlang einer ersten Bereichsachse, wobei sich der obere Innenwandbereich entlang einer zweiten Bereichsachse erstreckt, wobei sich die erste und/oder zweite Bereichsachse nicht parallel zu der Kolbeninnenwandungsachse erstrecken, wobei sich die erste Bereichsachse und/oder die zweite Bereichsachse insbesondere parallel oder winklig zur Drehachse des Ventilkolbens erstrecken.

Insbesondere erstrecken sich die erste Bereichsachse des unteren Innenwandbereichs und die erste Bereichsachse des unteren Randbereichs parallel.

Insbesondere erstrecken sich die zweite Bereichsachse des oberen Innenwandbereichs und die zweite Bereichsachse des oberen Randbereichs parallel.

Insbesondere umfasst der untere Innenwandbereich einen ersten gekrümmten unteren Innenwandbereich, welcher insbesondere als ein erster konkav gekrümmter unterer Innenwandbereich ausgebildet ist.

Insbesondere umfasst der obere Innenwandbereich einen gekrümmten oberen Innenwandbereich, welcher insbesondere als ein konvex gekrümmter oberer Innenwandbereich oder als ein konvex und konkav gekrümmter oberer Innenwandbereich ausgebildet ist.

Insbesondere ist der untere Innenwandbereich von dem oberen Innenwandbereich entlang einer sich orthogonal zur Drehachse erstreckenden x-y-Ebene versetzt, und/oder ist der untere Innenwandbereich von dem oberen Innenwandbereich entlang der Drehachse versetzt.

Gemäß einer Ausführungsform schließt die Wandungsrandsachse mit der Drehachse des Ventilkolbens einen Wandungswinkel in einem Bereich zwischen 15° und 75°, insbesondere von 45° ein.

Dadurch wird der technische Vorteil erreicht, dass der entsprechende Wandungswinkel ein vorteilhaftes Vorbeigleiten des jeweiligen Wandungsrands über die jeweilige Dichtungsanordnung ermöglicht.

Insbesondere schließt auch die Kolbeninnenwandungsachse mit der Drehachse des Ventilkolbens einen Wandungswinkel in einem Bereich zwischen 15° und 75°, insbesondere von 45° ein

Gemäß einer Ausführungsform weist der Ventilkoben einen sich um die Drehachse drehbaren Drehkolben auf, wobei der Drehkolben zumindest abschnittsweise innerhalb der Wandungsaussparung angeordnet ist, insbesondere in einem durch die Körperinnenwand und durch das Ventilgehäuse zumindest abschnittsweise geschlossenen fluidführenden Bereichs des Gehäuseinnenraum angeordnet ist.

Dadurch wird der technische Vorteil erreicht, dass der Drehkolben durch die schräg angeordnete Kolbeninnenwand vorteilhaft zur unteren Bodenplatte des Ventilgehäuses geführt werden kann.

Gemäß einer Ausführungsform weist das Ventilgehäuse eine Oberseitenaussparung auf, welche dem Gehäuseinnenraum zugewandt ist, wobei ein Drehkolben des Ventilkolbens durch die Oberseitenaussparung geführt ist, und wobei die Fluidverteilungsanordnung eine Drehkolbendichtung aufweist, welche den Drehkolben gegenüber der Oberseitenaussparung abdichtet.

Dadurch wird der technische Vorteil erreicht, dass eine Verbindung des Drehkolbens mit einem Drehkolbenantrieb sichergestellt werden kann, ohne dass Fluid aus dem Gehäuseinnenraum austreten kann.

Gemäß einer Ausführungsform weist der Ventilkolben, insbesondere die Kolbeninnenwand, eine Ausbuchtung auf, welche der Wandungsaussparung zugewandt ist, wobei ein um die Drehachse drehbarer Drehkolben des Ventilkolbens zumindest abschnittsweise in der Ausbuchtung aufgenommen ist.

Dadurch wird der technische Vorteil erreicht, dass die Ausbuchtung ein wirksames Führen des Drehkolbens von der Kolbenoberseite nach unten zu einer unteren Bodenwand des Ventilgehäuses ermöglicht.

Gemäß einer Ausführungsform ist in einer unteren Bodenwand des Ventilgehäuses eine Aufnahmeöffnung zur Aufnahme eines unteren Endes eines um die Drehachse drehbaren Drehkolbens des Ventilkolbens geformt.

Dadurch wird der technische Vorteil erreicht, dass die Aufnahmeöffnung eine wirksame drehbare Lagerung des Drehkolbens zum Rotieren des Ventilkolbens ermöglicht.

Gemäß einer Ausführungsform weist die zumindest eine Dichtungsanordnung ein Dichtungselement mit einer Dichtungslippe auf, wobei die Dichtungslippe an einem Öffnungsrand der jeweiligen Gehäuseöffnung des Ventilgehäuses umlaufend innerhalb des Gehäuseinnenraums angeordnet ist, und wobei der erste und zweite Wandungsrand ausgebildet sind, bei einer Rotation des Ventilkolbens über die jeweiligen Dichtungslippe zu streichen.

Dadurch wird der technische Vorteil erreicht, dass die Dichtungslippe einerseits eine wirksame Abdichtung gegenüber dem Ventilkolben ermöglicht, und die Dichtungslippe andererseits ein wirksames Vorbeistreichen des abgerundeten Wandungsrands des Ventilkolbens ermöglicht.

Gemäß einer Ausführungsform weisen die Dichtungsanordnungen jeweils ein Befestigungselement und ein Dichtungselement auf, wobei das jeweilige Befestigungselement an einer Innenwand der jeweiligen Fluidführung anliegt und ausgebildet ist, das jeweilige Dichtungselement mit einer Kraft zu beaufschlagen, um das jeweilige Dichtungselement an einen jeweiligen Öffnungsrand der jeweiligen Gehäuseöffnung des Ventilgehäuses zu pressen und eine fluidtechnische Abdichtung zwischen dem Ventilkolben und einem jeweiligen Öffnungsrand der jeweiligen Gehäuseöffnung zu bewirken.

Dadurch wird beispielsweise der technische Vorteil erreicht, dass die Dichtungsanordnung durch das Befestigungselement an dem entsprechenden Öffnungsrand der jeweiligen Gehäuseöffnung wirksam befestigt werden kann, und dass das an der Innenwand der jeweiligen Fluidführung anliegende Befestigungselement die erforderliche Presskraft bereitstellt, um das Dichtungselement wirksam gegen den entsprechenden Öffnungsrand zu pressen, um auch beim vorliegenden Anwendungsfall der Immersionskühlung bei verwendeten dielektrischen Ölen eine wirksame fluidtechnische Abdichtung zwischen dem Ventilkolben und der jeweiligen Gehäuseöffnung zu erreichen.

In einer vorteilhaften Ausführungsform ist das jeweilige Dichtungselement der jeweiligen Dichtungsanordnung als ein Zweikomponentenbauteil geformt, umfassend ein erstes Dichtungselementbauteil, welches an dem jeweiligen Öffnungsrand der jeweiligen Gehäuseöffnung des Ventilgehäuses anliegt, und umfassend ein zweites Dichtungselementbauteil, welches an dem jeweiligen Befestigungselement der jeweiligen Dichtungsanordnung anliegt.

Dadurch wird der technische Vorteil erreicht, dass die Materialien der beiden Dichtungselementbauteile jeweils auf den spezifischen Anwendungsfall hin optimiert werden können.

Insbesondere ist die als ein Zweikomponentenbauteil geformte Dichtungsanordnung ein Zweikomponenten-Verbundbauteil, welches dadurch charakterisiert ist, dass sich das Material des ersten Dichtungselementbauteils und das Material des zweiten Dichtungselementbauteils verbindet. Alternativ und insbesondere ist die als ein Zweikomponentenbauteil geformte Dichtungsanordnung ein Zweikomponenten-Montagebauteil, welches dadurch charakterisiert ist, dass sich das Material des ersten Dichtungselementbauteils nicht mit dem Material des zweiten Dichtungselementbauteils verbindet.

Gemäß einer Ausführungsform weist die Fluidverteilungsanordnung einen Gehäusedeckel auf, welcher mit dem Ventilgehäuse fluiddicht, insbesondere stoffschlüssig verbunden ist, wobei insbesondere die in dem Ventilgehäuse geformten Fluidführungen jeweils eine offene Fluidführungsoberseite aufweisen, welche durch jeweils eine obere Fluidwandungskontur des Gehäusedeckels fluiddicht verschlossen wird.

Dadurch wird der technische Vorteil erreicht, dass durch die zweischalige Ausbildung des Ventilgehäuses und des Gehäusedeckels die jeweilige Dichtungsanordnung zuerst vorteilhaft durch die offene Fluidführungsoberseite in den jeweiligen Fluidführungen positioniert werden kann, und die jeweilige Dichtungsanordnung anschließend durch das Verschließen des Gehäusedeckels fixiert werden kann.

Ausführungsbeispiele der Erfindung sind in den Zeichnungen dargestellt und werden im Folgenden näher beschrieben.

Es zeigen:
- Fig. 1: eine perspektivische Ansicht eines Ausschnittes einer Fluidverteilungsanordnung gemäß einer ersten Ausführungsform in einer Schnittdarstellung;
- Fig. 2A, 2B: perspektivische Ansichten eines Ventilkolbens der in der Fig. 1 gezeigten Fluidverteilungsanordnung in unterschiedlichen seitlichen Ansichten;
- Fig. 3: eine perspektivische Ansicht eines Ausschnittes der in der Fig. 1 gezeigten Fluidverteilungsanordnung in einer seitlichen Ansicht;
- Fig. 4: eine perspektivische Ansicht eines Ventilkolbens gemäß einer zweiten Ausführungsform; und
- Fig. 5: eine perspektivische Ansicht eines Ventilkolbens gemäß einer zweiten Ausführungsform.

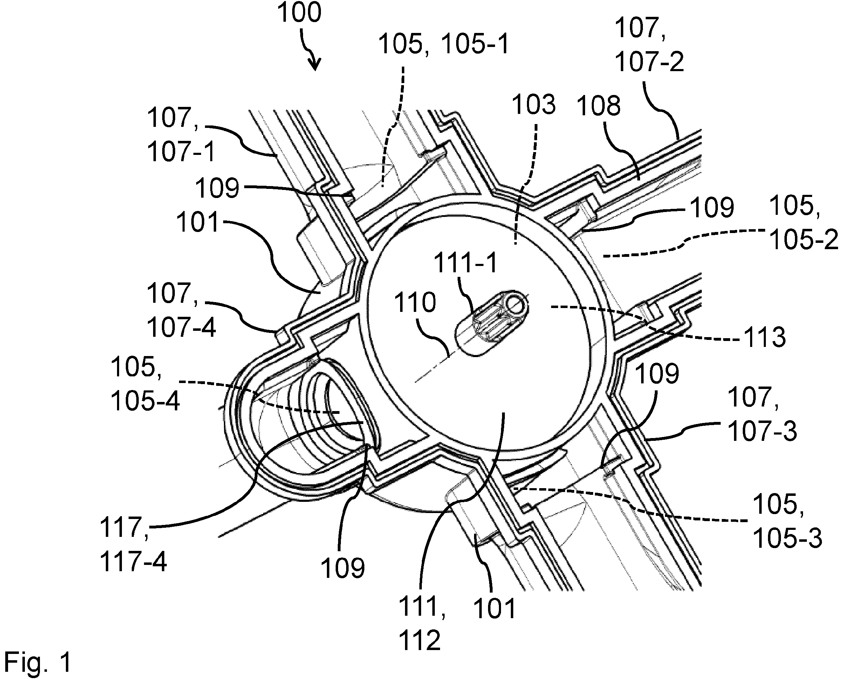

Fig. 1 zeigt eine perspektivische Ansicht eines Ausschnittes einer Fluidverteilungsanordnung gemäß einer Ausführungsform in einer Schnittdarstellung.

Auch wenn dies in der Fig. 1 aufgrund des gewählten Ausschnittes nicht zu erkennen ist, ist die Fluidverteilungsanordnung 100 kein isoliertes Bauteil, sondern integraler Teil eines Fluidverteilungselements, insbesondere einer Fluidverteilungsplatte, mit zumindest zwei, insbesondere vier, Fluidkanälen zum Führen von Fluid. Entsprechende Fluidkanäle der Fluidverteilungsanordnung 100 sind in dem Fluidverteilungselement je nach Anwendungsfall und Einbausituation teilweise in komplexen Geometrien geformt, wobei hierbei auf die nachfolgenden Darstellungen verwiesen wird.

Die Fluidverteilungsanordnung 100 gemäß der vorliegenden Offenbarung dient zum Verbinden von Fluidleitungen in einer Vielzahl von fluidführenden Systemen eines Fahrzeuges. Die Fluidverteilungsanordnung 100 kann zur fluidtechnischen Verbindung von Kraftstoff-, Kühlflüssigkeits-, Ladeluft-, Bremsflüssigkeits-, Wasser-, SCR-, und/oder Getriebeölleitungen in Fahrzeugen eingesetzt werden. Insbesondere wird die Fluidverteilungsanordnung 100 in Kühlmittel-führenden Fluidleitungen, welche zur Kühlung von Batteriezellen und/oder elektrischen Antriebsmotoren in einem elektrisch angetriebenen Fahrzeug verwendet werden, eingesetzt.

In fluidführenden Systemen eines Fahrzeuges werden unterschiedliche Fluide, wie z.B. Gase oder Flüssigkeiten, teilweise unter hohem Druck und bei hohen Temperaturen geleitet. Aufgrund der beengten Bauraumsituation in einem Fahrzeug müssen verschiedene Leitungen der entsprechenden fluidführenden Systeme oftmals durch entsprechende Fluidverteilungsanordnungen 100 miteinander verbunden werden, um eine wirksame Fluidleitung zu bewirken. Hierbei werden an die fluidtechnischen Schnittstellen zwischen entsprechenden fluidführenden Leitungen entsprechend hohe Anforderungen in Bezug auf Stabilität und Fluiddichtigkeit der Fluidverteilungsanordnung 100 gestellt.

In neuesten Fahrzeuggenerationen von Batteriekühlungssystemen soll zukünftig die Kühlung des elektrischen Antriebsmotors und/oder die Kühlung der Batteriezellen anstatt mit den bisher üblichen indirekten Plattenkühlungssystemen unter Verwendung eines Wasser-Glykol-Gemisches, mittels einer direkten Immersionskühlung durch Verwendung eines dielektrischen Öls gekühlt werden. Der Vorteil einer entsprechenden Immersionskühlung ist eine effektivere und gleichmäßigere Kühlung direkt an der Wärmequelle, wie beispielsweise den Batteriezellen.

Dadurch kann eine schnellere Ladezeit und eine verlängerte Lebenszeit der Batteriezellen erreicht werden. Zusätzlich ermöglicht eine Immersionskühlung systembedingt ein zusätzliches Sicherheitspotenzial beim Auftreten eines Brandes aufgrund einer defekten oder zerstörten Batteriezelle. Allerdings ist bei einer entsprechenden Immersionskühlung unter Verwendung eines entsprechenden Öls gegenüber den bisherigen Fluidverteilungselementen mit Kühlwasserventilen ein erhöhter Massendurchsatz des Fluids erforderlich.

Um hierbei entsprechende Strömungsverluste zu verhindern, sind aus diesem Grund größere Leitungsquerschnitte der Fluidkanäle notwendig, welche größer als 25 mm sein können. Zudem müssen bei einer entsprechenden Immersionskühlung die Ölströme gelenkt werden, was erfindungsgemäß mittels eines Stell- oder Umlenkventils erfolgt, in dem mittels eines anzudichtenden Ventilkolbens die entsprechenden Ölströme wirksam umgelenkt werden. Zudem muss ein entsprechendes Fluidventil in diesem besonderen Fall in das Fluidverteilungselement, insbesondere die Fluidverteilungsplatte, zu integrieren.

Aufgrund der entsprechenden größeren Leitungsquerschnitte der Fluidkanäle, der entsprechenden Umlenkung der Ölströme, sowie der Verwendung eines neuartigen Öls als Kühlmittel stellt die vorliegende Erfindung einen neuen Ansatz eines geeigneten Montage- und kosteneffektiven Dichtungskonzeptes bereit.

Die Fluidverteilungsanordnung 100 gemäß dem in Fig. 1 dargestellten Ausführungsbeispiel der vorliegenden Erfindung umfasst ein Ventilgehäuse 101, welches einen Gehäuseinnenraum 103 begrenzt, wobei das Ventilgehäuse 101 zumindest zwei, insbesondere vier Gehäuseöffnungen 105, 105-1, 105-2, 105-3, 105-4 aufweist. Die Gehäuseöffnungen 105, 105-1, 105-2, 105-3, 105-4 verbinden den Gehäuseinnenraum 103 mit jeweils einer Fluidführung 107, 107-1, 107-2, 107-3, 107-4, insbesondere Fluidkanal, der Fluidverteilungsanordnung 100 fluidtechnisch.

Die Fluidführungen 107, 107-1, 107-2, 107-3, 107-4 sind einstückig mit dem Ventilgehäuse 101 ausgebildet.

Die jeweilige Gehäuseöffnung 105, 105-1, 105-2, 105-3, 105-4 wird jeweils durch einen Öffnungsrand 109 des Ventilgehäuses 101 begrenzt.

Die Fluidverteilungsanordnung 100 umfasst ferner einen Ventilkolben 111, welcher um eine Drehachse 110 drehbar in dem Gehäuseinnenraum 103 angeordnet und ausgebildet ist, in Abhängigkeit einer Kolbenstellung die zumindest zwei, insbesondere vier, Gehäuseöffnungen 105, 105-1, 105-2, 105-3, 105-4 zumindest teilweise fluidtechnisch zu sperren oder zumindest teilweise fluidtechnisch freizugeben.

In der Fig. 1 ist lediglich die Kolbenoberseite 112 des Ventilkolbens 111 einsehbar. Für eine detaillierte Beschreibung der Geometrie des Ventilkolbens 111 wird auf die Ausführungen zu den nachfolgenden Figuren verwiesen.

Insbesondere ist der Ventilkolben 111 in Abhängigkeit der Kolbenstellung ausgebildet eine bestimmte Gehäuseöffnung 105, 105-1, 105-2, 105-3, 105-4 mit den jeweils benachbarten Gehäuseöffnungen 105, 105-1, 105-2, 105-3, 105-4 fluidtechnisch zu verbinden, und die der bestimmten Gehäuseöffnungen 105, 105-1, 105-2, 105-3, 105-4 gegenüberliegende Gehäuseöffnung 105, 105-1, 105-2, 105-3, 105-4 fluidtechnisch zu sperren.

Bei einer anderen Geometrie des Ventilkolben 111 ist der Ventilkolben 111 in Abhängigkeit der Kolbenstellung ausgebildet eine bestimmte Gehäuseöffnung 105, 105-1, 105-2, 105-3, 105-4 mit nur mit einer der jeweils benachbarten Gehäuseöffnungen 105, 105-1, 105-2, 105-3, 105-4 fluidtechnisch zu verbinden, und die andere der jeweils benachbarten Gehäuseöffnungen 105, 105-1, 105-2, 105-3, 105-4, sowie die der bestimmten Gehäuseöffnungen 105, 105-1, 105-2, 105-3, 105-4 gegenüberliegende Gehäuseöffnung 105, 105-1, 105-2, 105-3, 105-4 fluidtechnisch zu sperren. In diesem Fall weist der Ventilkoben somit eine Geometrie für ein 2/2-Wegeventil mit zwei gegenläufigen 90° Kanälen auf.

Sind nur drei Gehäuseöffnungen 105, 105-1, 105-2, 105-3 oder sogar nur zwei Gehäuseöffnungen 105, 105-1, 105-2 in der Fluidverteilungsanordnung 100 vorhanden, können je nach Geometrie des Ventilkobens 111 unterschiedlichste Fluidschaltungskonzepte verwirklicht werden, welche im Detail hier nicht alle ausgeführt werden.

Ferner weist das Ventilgehäuse 101 in einer Oberseite eine Kolbenöffnung 113 auf, durch welche der Ventilkolben 111 in den Gehäuseinnenraum 103 des Ventilgehäuses 101 eingeführt werden kann. Die Kolbenöffnung 113 wird durch einen in Fig. 1 nicht dargestellten Gehäusedeckel 115 der Fluidverteilungsanordnung 100 verschlossen. In dem in Fig. 1 nicht dargestellten Gehäusedeckel 115 ist eine Deckelöffnung 116 geformt, durch welche der Drehkolben 111-1 des Ventilkolbens 111 geführt ist, und welche durch einen in Fig. 1 nicht dargestellten Ventilmotor bewegt wird.

Wie aus der Fig. 1 ferner hervorgeht, ist das Ventilgehäuse 101 im Bereich der Fluidführungen 107 jeweils als eine Halbschale geformt. Das Ventilgehäuse 101 bildet hier im Bereich der Fluidführungen 107 eine untere Halbschale, und der in Fig. 1 nicht dargestellte Gehäusedeckel 115 bildet hierbei im Bereich der Fluidführungen 107 eine obere Halbschale, welche zusammen die jeweilige Fluidführung 107 fluiddicht begrenzen. Somit schließt der Gehäusedeckel 115 die offene Fluidführungsoberseite 108 der Fluidführungen 107 des Ventilgehäuses 101 und auch den Gehäuseinnenraum 103 fluiddicht ab.

Ferner sind zur fluidtechnischen Abdichtung zwischen dem Ventilkolben 111 und dem Ventilgehäuse 101 an der jeweiligen Gehäuseöffnung 105, 105-1, 105-2, 105-3, 105-4, jeweils zumindest eine Dichtungsanordnung 117, 117-1, 117-2, 117-3, 117-4, angeordnet, wobei in der Fig. 1 lediglich die vierte Dichtungsanordnung 117-4 an der vierten Gehäuseöffnung 105-4 dargestellt ist.

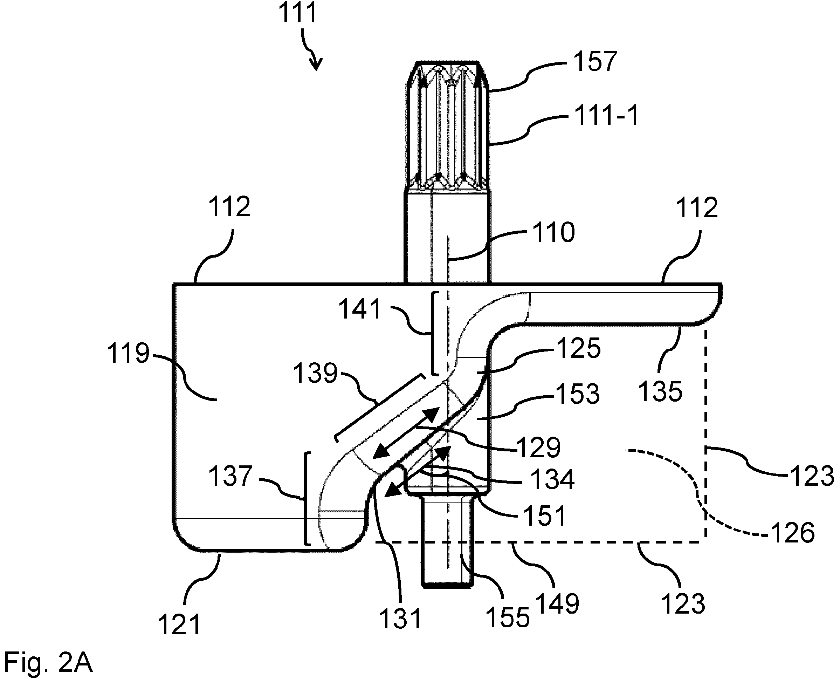

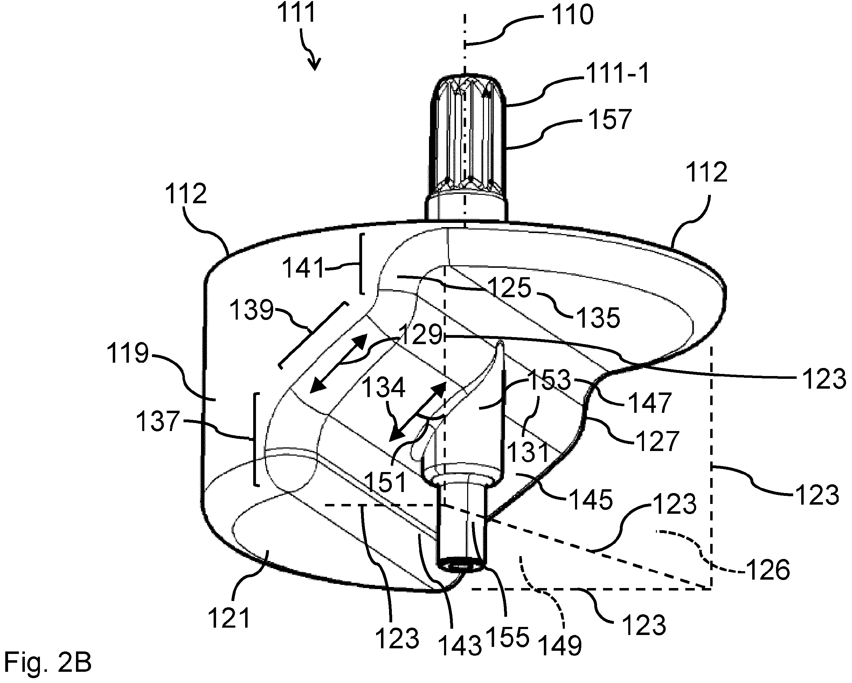

Die Figuren 2A und 2B zeigten perspektivische Ansichten eines Ventilkolbens der in der Fig. 1 gezeigten Fluidverteilungsanordnung in unterschiedlichen seitlichen Ansichten.

Der Ventilkolben 111 weist eine dem in den Figuren 2A und 2B nicht dargestellten Ventilgehäuse 101 zugewandte Kolbenaußenwand 119 auf, wobei sich die Kolbenaußenwand 119 von einer Kolbenunterseite 121 zu einer Kolbenoberseite 112 des Ventilkolbens 111 erstreckt und ausgebildet ist, zumindest eine der in den Figuren 2A und 2B nicht dargestellten Gehäuseöffnungen 105, 105-1, 105-2, 105-3, 105-4 des Ventilgehäuses 101 in Abhängigkeit von einer Kolbenstellung des Ventilkolbens 111 zumindest teilweise fluidtechnisch zu sperren. Die Kolbenaußenwand 119 umläuft somit das in den Figuren 2A und 2B nicht dargestellte Ventilgehäuse 101 zumindest abschnittsweise.

Der Ventilkolben 111 weist ferner eine Wandungsaussparung 123 auf, welche dem in den Figuren 2A und 2B nicht gezeigten Ventilgehäuse 101 zugewandt ist, und welche ausgebildet ist, zumindest eine der Gehäuseöffnungen 105, 105-1, 105-2, 105-3, 105-4 in Abhängigkeit von einer Kolbenstellung des Ventilkolbens 111 zumindest teilweise fluidtechnisch freizugeben. Die Wandungsaussparung 123 ist in den Figuren 2A und 2B durch Hilfslinien dargestellt.

Die Kolbenaußenwand 119 wird, wie in den Figuren 2A und 2B dargestellt ist, durch einen ersten abgerundeten Wandungsrand 125 und zweiten abgerundeten Wandungsrand 127 von der Wandungsaussparung 123 abgegrenzt.

Der erste und zweite Wandungsrand 125, 127 erstrecken sich jeweils zumindest abschnittsweise entlang einer Wandungsrandsachse 129, wobei sich die Wandungsrandsachse 129 winklig zur Drehachse 110 des Drehkolbens 111-1 des Ventilkolbens 111 erstreckt.

Durch die aus den Figuren 2A und 2B zu entnehmende winklige Erstreckungsrichtung der Wandungsrandachse 129 ergibt sich, dass der erste und zweite abgerundete Wandungsrand 125, 127 ausgebildet sind, bei einer Rotation des Ventilkolbens 111 über die zumindest eine Dichtungsanordnung 117 zu streichen. Hierbei ergibt sich durch die winklige Erstreckungsrichtung der Wandungsrandachse 129 ein relativ widerstandfreies Vorbeigleiten, bzw. Hinwegstreichen des ersten, bzw. zweiten abgerundeten Wandungsrands 125, 127 über die jeweilige Dichtungsanordnung 117 bei einer Rotation des Ventilkolbens 111 um die Drehachse 110.

Dadurch ergibt sich eine besonders einfache Schaltung des Ventils aufgrund einer widerstandsarmen Drehung des Ventilkolbens 111, wobei die Dichtungsanordnungen 117 bei der Drehung des Ventilkolbens 111 nur eine geringe Verformung erfahren, was die Haltbarkeit der Dichtungsanordnungen 117 verbessert und zudem die Abdichtungsfunktion der Dichtungsanordnung 117 an der jeweiligen Gehäuseöffnung 105 auch bei einem mehrmaligen Schalten des Ventils während einer gegebenenfalls langen Betriebsdauer der Fluidventilanordnung 100 ermöglicht.

Aus den Figuren 2A und 2B geht ferner hervor, dass der Ventilkolben 111 eine Kolbeninnenwand 131 aufweist, welche die Kolbenunterseite 121 mit der Kolbenoberseite 112 verbindet, und welche sich von dem ersten Wandungsrand 125 zu dem zweiten Wandungsrand 127 erstreckt, wobei insbesondere die Kolbeninnenwand 131 der Wandungsaussparung 123 zugewandt ist, und mit dem Ventilgehäuse 101 einen in den Figuren 2A und 2B lediglich schematisch gezeigten fluidführenden Bereich 126 des Gehäuseinnenraums 103 begrenzt.

Somit bilden die Kolbenaußenwand 119, der erste und zweite Wandungsrand 125, 127, sowie die Kolbeninnenwand 131 die laterale äußere Begrenzung des Ventilkolbens 111.

Aus den Figuren 2A und 2B geht ferner hervor, dass sich die Kolbeninnenwand 131 zumindest abschnittsweise entlang einer Kolbeninnenwandungsachse 134 erstreckt, welche sich parallel zu der Wandungsrandachse 129 erstreckt.

Auch wenn dies in den Figuren 2A und 2B nicht dargestellt ist, ist die Kolbenunterseite 121 einer unteren Bodenwand des Ventilgehäuses 101 zugewandt. Die Kolbenoberseite 112 des Ventilkolbens 111 weist hierbei eine Kolbenoberseiteninnenwand 135 auf, welche der unteren Bodenwand des Ventilgehäuses 101 zugewandt ist, und welche von der unteren Bodenwand des Ventilgehäuses 101 beabstandet ist. Wie in den Figuren 2A und 2B dargestellt ist, erstreckt sich die Kolbeninnenwand 131 von dem ersten abgerundeten Wandungsrand 125 und von dem zweiten abgerundeten Wandungsrand 127 und von der Kolbenunterseite 121 zu der Kolbenoberseiteninnenwand 135.

Nachfolgend wird auf die Detailausgestaltung des ersten und zweiten Wandungsrands 125, 127, sowie der Kolbeninnenwand 131 eingegangen.

Wie in den Figuren 2A und 2B gezeigt ist, weist der erste abgerundete Wandungsrand 125 und der zweite abgerundete Wandungsrand 127 jeweils drei Randbereiche 137, 139, 141 auf, umfassend einen jeweiligen unteren Randbereich 137, einen jeweiligen mittleren Randbereich 139 und einen jeweiligen oberen Randbereich 141.

Der jeweilige untere Randbereich 137 ist mit der Kolbenaußenwand 119, der Kolbenunterseite 121, der Kolbeninnenwand 131 und dem mittleren Randbereich 139 verbunden.

Der jeweilige obere Randbereich 141 ist mit der Kolbenaußenwand 119, der Kolbenoberseite 112, der Kolbeninnenwand 131 und dem mittleren Randbereich 139 verbunden.

Der jeweilige mittlere Randbereich 141 ist mit der Kolbenaußenwand 119, dem unteren Randbereich 137, dem oberen Randbereich 139 und der Kolbeninnenwand 131 verbunden.

Aus den Figuren 2A und 2B ist zu entnehmen, dass sich der mittlere Randbereich 139 entlang der Wandungsrandsachse 129 erstreckt.

Da sich der erste und zweite abgerundete Wandungsrand 125, 127 und die Kolbeninnenwand 131 annähernd parallel erstrecken, weist auch die Kolbeninnenwand 131 analog einen unteren Innenwandbereich 143, einen mittleren Innenwandbereich 145 und einen oberen Innenwandbereich 147 auf. Da die Kolbeninnenwand 131 in der Figur 2A nicht direkt einsehbar ist, wird hierzu auf die Markierungen in der Figur 2B verwiesen.

Der untere Innenwandbereich 143 ist mit der Kolbenunterseite 121, dem mittleren Innenwandbereich 145 und dem unteren Randbereich 137 des ersten und zweiten Wandungsrands 125, 127 verbunden.

Der obere Innenwandbereich 147 ist mit der Kolbenoberseite 112, insbesondere der Kolbenoberseiteninnenwand 135, dem mittleren Innenwandbereich 145 , und dem oberen Randbereich 141 des ersten und zweiten Wandungsrands 125, 127 verbunden.

Der mittlere Innenwandbereich 145 ist mit dem unteren Innenwandbereich 143, mit dem oberen Innenwandbereich 147 der Kolbeninnenwand 131 und mit dem mittleren Randbereich 139 des ersten und zweiten Wandungsrands 125, 127 verbunden, wobei sich der mittlere Innenwandbereich 145 entlang der Kolbeninnenwandungsachse 134 erstreckt.

Aus den Figuren 2A und 2B ist zu entnehmen, dass sich sowohl der mittlere Randbereich 139 des ersten und zweiten Wandungsrands 125, 127 als auch der mittlere Innenwandbereich 145 der Kolbeninnenwand 131 insbesondere gerade erstrecken, insbesondere entlang der Wandungsrandachse 129, bzw. der Kolbeninnenwandungsachse 134.

Aus den Figuren 2A und 2B ist zu entnehmen, dass sich der untere Randbereich 137 des ersten und zweiten Wandungsrands 125, 127 als auch der untere Innenwandbereich 143 der Kolbeninnenwand 131 gekrümmt erstrecken, insbesondere konkav gekrümmt, erstrecken.

Aus den Figuren 2A und 2B ist zu entnehmen, dass sich der obere Randbereich 141 des ersten und zweiten Wandungsrands 125, 127 als auch der obere Innenwandbereich 147 der Kolbeninnenwand 131 gekrümmt erstrecken, insbesondere konkav und konvex gekrümmt, erstrecken.

Somit erstrecken sich insbesondere der untere Randbereich 137 als auch der obere Randbereich 141 des ersten und zweiten Wandungsrands 125, 127 nicht parallel zu der Wandungsrandachse 129 des mittleren Randbereichs 139.

Somit erstrecken sich insbesondere der untere Innenwandbereich 143 als auch der obere Innenwandbereich 147 des ersten und zweiten Wandungsrands 125, 127 nicht parallel zu der Kolbeninnenwandungsachse 134 des mittleren Innenwandbereichs 145.

Aus den Figuren 2A und 2B ist somit zu entnehmen, dass sowohl der untere Randbereich 137 von dem oberen Randbereich 141, als auch der untere Innenwandbereich 143 von dem oberen Innenwandbereich 147, entlang einer sich orthogonal zur Drehachse 110 erstreckenden x-y-Ebene 149 versetzt ist. Wie in den Figuren 2A und 2B lediglich schematisch dargestellt ist, wird die x-y-Ebene 149 durch die entsprechenden sich von der Kolbenunterseite 121 erstreckenden Hilfslinien aufgespannt, welche die Wandungsaussparung 123 definieren.

Aus den Figuren 2A und 2B ist ferner zu entnehmen, dass sowohl der untere Randbereich 137 von dem oberen Randbereich 141, als auch der untere Innenwandbereich 143 von dem oberen Innenwandbereich 147, entlang der Drehachse 110 versetzt ist.

Aus den Figuren 2A und 2B ist zu entnehmen, dass sowohl die Wandungsrandachse 129 des mittleren Randbereichs 139 mit der Drehachse 110, als auch die Kolbeninnenwandungsachse 134 des mittleren Innenwandbereichs 145 mit der Drehachse 110, einen Wandungswinkel 151 in einem Bereich von 15° bis 75°, insbesondere von 45°, einschließen.

Zudem ist in den Figuren 2A und 2B noch erkennen, dass die Körperinnenwand 131 des Ventilkolbens 111 eine Ausbuchtung 153 aufweist, welche der Wandungsaussparung 123 zugewandt ist, wobei der Drehkolben 111-1 des Ventilkobens 111 zumindest abschnittsweise in der Ausbuchtung 153 angeordnet ist.

Zudem weist der Drehkolben 111-1 ein unteres Ende 155 auf, welches in einer in den Figuren 2A und 2B nicht dargestellten Aufnahmeöffnung der unteren Bodenwand des Ventilgehäuses 101 aufgenommen ist, um eine wirksame drehbare Lagerung des Ventilkolbens 111 in dem Ventilgehäuse 101 zu erreichen.

Zudem weist der Drehkolben 111-1 ein oberes Ende 157 auf, welches in einer in den Figuren 2A und 2B nicht dargestellten Oberseitenaussparung des Ventilgehäuses 101 geführt ist, und welche insbesondere durch eine in den Figuren 2A und 2B nicht dargestellte Drehkolbendichtung gegenüber dem Drehkolben 111-1 abgedichtet ist.

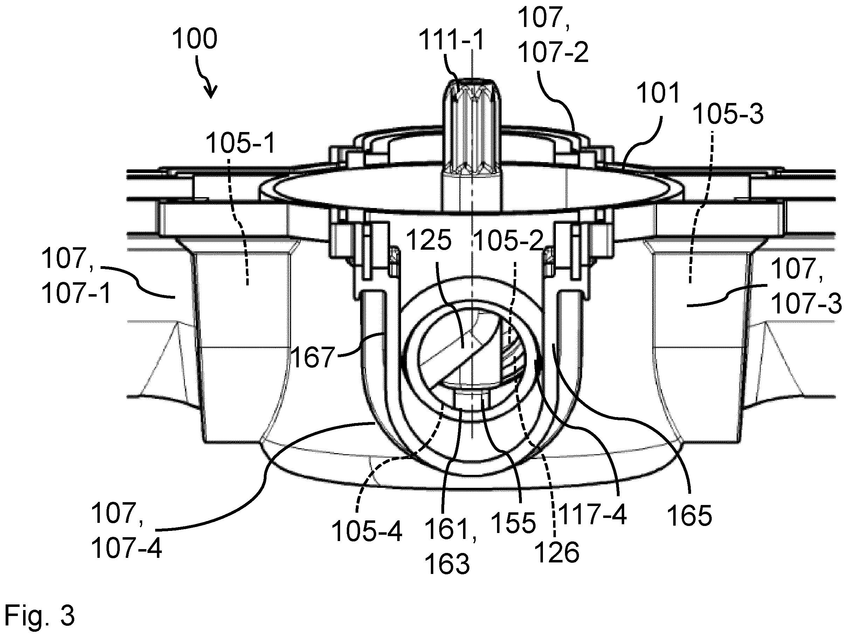

Fig. 3 zeigt eine perspektivische Ansicht eines Ausschnittes der in der Fig. 1 gezeigten Fluidverteilungsanordnung in einer seitlichen Ansicht.

In der Fig. 3 kann durch die vierte Gehäuseöffnung 105-4 des Ventilgehäuses 101 in den Gehäuseinnenraum 103 Einsicht genommen werden. Man erkennt, dass der Ventilkolben 111 in der in der Fig. 3 gezeigten Kolbenstellung die vierte Gehäuseöffnung 105-4 und auch die der vierten Gehäuseöffnung 105-4 gegenüberliegende zweite Gehäuseöffnung 105-2 nur zum Teil abdeckt. Somit gibt der Ventilkolben 111 in der in der Fig. 3 gezeigten Kolbenstellung die zweite Gehäuseöffnung 105-2, die dritte Gehäuseöffnung 105-3, und die vierte Gehäuseöffnung 105-4 fluidtechnisch frei und verbindet diese, während die erste Gehäuseöffnung 105-1 durch den Ventilkolben 111, bzw. durch die in der Fig. 3 nicht einsehbare Kolbenaußenwand 119 des Ventilkolbens 111 verschlossen wird.

Bei einem Einblick durch die vierte Gehäuseöffnung 105-4 ist insbesondere der erste abgerundete Wandungsrand 125 des Ventilkolbens 111 zu erkennen, welcher innenseitig an der vierten Dichtungsanordnung 117-4 abschnittsweise anliegt, und ist zudem das untere Ende 155 des Drehkolbens 111-1 zu erkennen, welches in der in Fig. 3 nicht einsehbaren Aufnahmeöffnung der unteren Bodenwand des Ventilgehäuses 101 festgelegt ist.

Zudem ist aus der Fig. 3 zu entnehmen, dass die Dichtungsanordnung 117, insbesondere vierte Dichtungsanordnung 117-4 ein Dichtungselement 161 mit einer Dichtungslippe 163 aufweist, wobei die Dichtungslippe 163 an dem in Fig. 3 nicht einsehbaren Öffnungsrand 109 der vierten Gehäuseöffnung 105-4 des Ventilgehäuses 101 umlaufend innerhalb des Gehäuseinnenraums 103 angeordnet ist, und wobei der erste und zweite Wandungsrand 125, 127 ausgebildet sind, bei einer Rotation des Ventilkolbens 111 über die jeweilige Dichtungslippe 163 zu streichen.

Die Dichtungsanordnungen 117, 117-1, 117-2, 117-3, 117-4 weisen jeweils ein Befestigungselement 165 und das Dichtungselement 161 auf, wobei das jeweilige Befestigungselement 165 an einer Innenwand 167 der jeweiligen Fluidführung 107, 107-1, 107-2, 107-3, 107-4 anliegt und ausgebildet ist, das jeweilige Dichtungselement 161 mit einer Kraft zu beaufschlagen, um das jeweilige Dichtungselement 161 an den jeweiligen Öffnungsrand 109 der jeweiligen Gehäuseöffnung 105-1, 105-2, 105-3, 105-4 des Ventilgehäuses 101 zu pressen und eine fluidtechnische Abdichtung zwischen dem Ventilkolben 111 und einem jeweiligen Öffnungsrand 109 der jeweiligen Gehäuseöffnung 105-1, 105-2, 105-3, 105-4 zu bewirken.

Durch die Abstützung des jeweiligen Befestigungselements 165 an der jeweiligen Innenwand 167 der jeweiligen Fluidführung 107 wird ein Anpressdruck auf das jeweilige Dichtungselement 161 dahingehend ausgeübt, dass das jeweilige Dichtungselement 161 wirksam an den jeweiligen Öffnungsrand 109 angepresst wird, so dass eine wirksame fluidtechnische Abdichtung zwischen dem Ventilkolben 111 und dem jeweiligen Öffnungsrand 109 des Ventilgehäuses 101 bewirkt wird.

Somit stellen die Dichtungsanordnungen 117 in Abhängigkeit von der Kolbenstellung des Ventilkolbens 111 eine fluidtechnische Abdichtung für die Gehäuseöffnungen 105 des Ventilgehäuses 101 sicher.

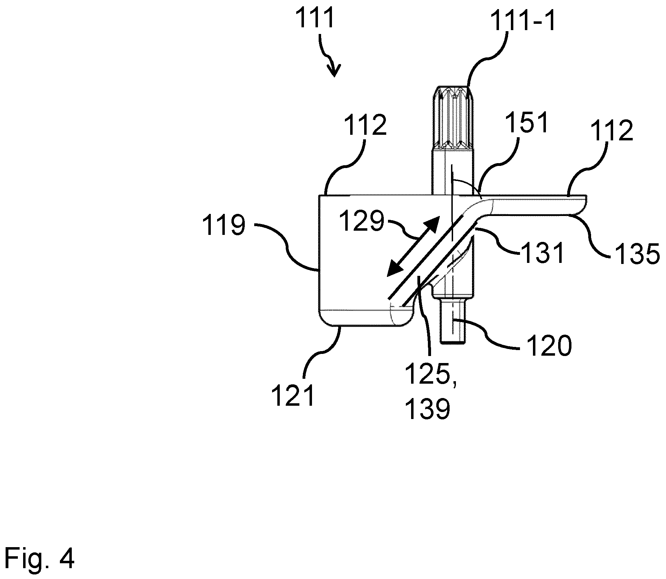

Fig. 4 zeigt eine perspektivische Ansicht eines Ventilkolbens gemäß einer zweiten Ausführungsform.

Der in der Fig. 4 gezeigte Ventilkolben 111 gemäß der zweiten Ausführungsform unterscheidet sich von dem in den Figuren 2A und 2B gezeigten Ventilkolben 111 gemäß der ersten Ausführungsform lediglich dadurch, dass der erste und zweite abgerundete Wandungsrand 125, 127 keinen oberen gekrümmten Bereich 141 und auch keinen unteren gekrümmten Bereich 137 aufweisen, sondern dass sich der mittlere Bereich 139 des ersten und zweiten abgerundeten Wandungsrands 125, 127 von der Kolbenunterseite 121 gerade entlang der Wandungsrandachse 129 bis zur Kolbenoberseite 112, insbesondere der Kolbenoberseiteninnenwand 135 erstrecken.

Auch wenn die in der Darstellung der Fig. 4 nicht gezeigt ist, erstreckt sich demnach auch der mittlere Innenwandbereich 145 der Kolbeninnenwand 131 von der Kolbenunterseite 121 gerade entlang der Kolbeninnenwandungsachse 134 bis zur Kolbenoberseite 112, insbesondere der Kolbenoberseiteninnenwand 135.

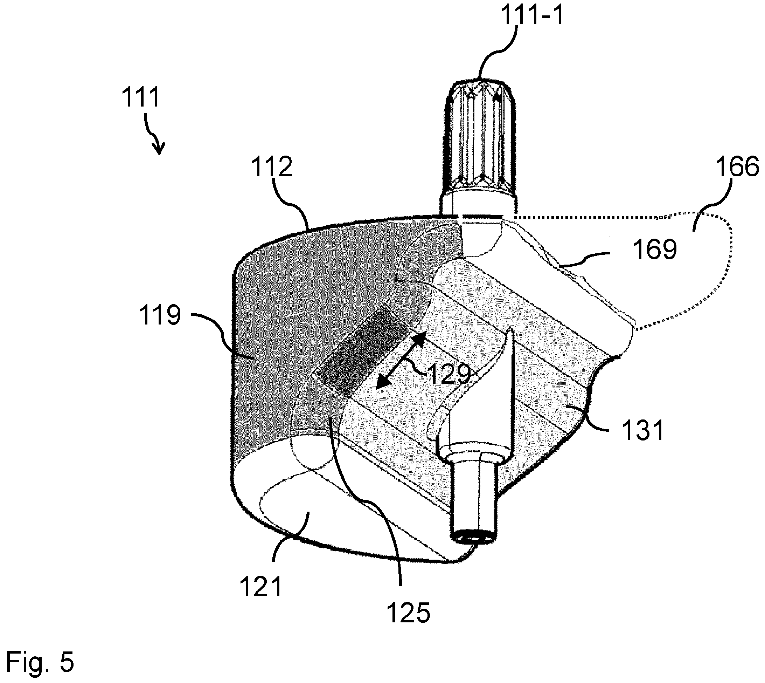

Fig. 5 zeigt eine perspektivische Ansicht eines Ventilkolbens gemäß einer dritten Ausführungsform.

Der in der Fig. 5 gezeigte Ventilkolben 111 gemäß der dritten Ausführungsform unterscheidet sich von dem in den Figuren 2A und 2B gezeigten Ventilkolben 111 gemäß der ersten Ausführungsform lediglich dadurch, dass die Kolbenoberseite 112 den Gehäuseinnenraum 103 nicht vollständig abschließt. Vielmehr weist die Kolbenoberseite 112 eine Kolbenoberseitenaussparung 166 auf, welche von der in der Fig. 5 nicht dargestellten unteren Bodenwand des Ventilgehäuses 101 beabstandet ist.

Aus der Fig. 5 ist zu entnehmen, dass sich die Kolbeninnenwand 131 von dem ersten abgerundeten Wandungsrand 125 und von dem zweiten abgerundeten Wandungsrand 127 und von der Kolbenunterseite 121 zu einem Kolbenoberseitenwandrand 169 erstreckt, welcher die Kolbeninnenwand 131 von der Kolbenoberseitenaussparung 166 abgrenzt.

### BEZUGSZEICHENLISTE

- 100: Fluidverteilungsanordnung
- 101: Ventilgehäuse
- 103: Gehäuseinnenraum
- 105: Gehäuseöffnung
- 105-1: Erste Gehäuseöffnung
- 105-2: Zweite Gehäuseöffnung
- 105-3: Dritte Gehäuseöffnung
- 105-4: Vierte Gehäuseöffnung
- 106: Obere Fluidwandungskontur
- 107: Fluidführung
- 107-1: Erste Fluidführung
- 107-2: Zweite Fluidführung
- 107-3: Dritte Fluidführung
- 107-4: Vierte Fluidführung
- 108: Offene Fluidführungsoberseite
- 109: Öffnungsrand
- 110: Drehachse
- 111: Ventilkolben
- 111-1: Drehkolben
- 112: Kolbenoberseite
- 113: Kolbenöffnung
- 115: Gehäusedeckel
- 116: Deckelöffnung
- 117: Dichtungsanordnung
- 117-1: Erste Dichtungsanordnung
- 117-2: Zweite Dichtungsanordnung
- 117-3: Dritte Dichtungsanordnung
- 117-4: Vierte Dichtungsanordnung
- 119: Kolbenaußenwand
- 121: Kolbenunterseite
- 123: Wandungsaussparung
- 125: Erster abgerundeter Wandungsrand
- 126: Fluidführender Bereich
- 127: Zweiter abgerundeter Wandungsrand
- 129: Wandungsrandachse
- 131: Kolbeninnenwand
- 133: Kolbeninnenwandaussparung
- 134: Kolbeninnenwandungsachse
- 135: Kolbenoberseiteninnenwand
- 137: unterer Randbereich
- 139: mittlerer Randbereich
- 141: oberer Randbereich
- 143: unterer Innenwandungsbereich
- 145: mittlerer Innenwandungsbereich
- 147: oberer Innenwandungsbereich
- 149: X-Y-Ebene
- 151: Wandungswinkel
- 153: Ausbuchtung
- 155: Unteres Ende des Drehkolbens
- 157: Oberes Ende des Drehkolbens
- 161: Dichtungselement
- 163: Dichtungslippe
- 165: Befestigungselement
- 166: Kolbenoberseitenaussparung
- 167: Innenwand der Fluidführung
- 169: Kolbenoberseitenwandrand

## Patentansprüche

1. Fluidverteilungsanordnung (100), umfassend:
zumindest zwei Fluidführungen (107, 107-1, 107-2, 107-3, 107-4), welche ausgebildet sind, Fluid zu führen;
ein Ventilgehäuse (101), welches einen Gehäuseinnenraum (103) begrenzt, wobei das Ventilgehäuse (101) zumindest zwei Gehäuseöffnungen (105, 105-1, 105-2, 105-3, 105-4) aufweist, welche jeweils den Gehäuseinnenraum (103) mit einer der zumindest zwei Fluidführungen (107, 107-1, 107-2, 107-3, 107-4) fluidtechnisch verbinden;
zumindest eine Dichtungsanordnung (117, 117-1, 117-2, 117-3, 117-4), welche in jeweils einer der zumindest zwei Gehäuseöffnungen (105, 105-1, 105-2, 105-3, 105-4) angeordnet ist; und
einen Ventilkolben (111), welcher um eine Drehachse (110) drehbar in dem Gehäuseinnenraum (103) angeordnet ist,
wobei der Ventilkolben (111) eine dem Ventilgehäuse (101) zugewandte Kolbenaußenwand (119) aufweist, wobei sich die Kolbenaußenwand (119) von einer Kolbenunterseite (121) zu einer Kolbenoberseite (112) des Ventilkolbens (111) erstreckt und ausgebildet ist, zumindest eine der zumindest drei Gehäuseöffnungen (105, 105-1, 105-2, 105-3, 105-4) in Abhängigkeit von einer Kolbenstellung des Ventilkolbens (111) zumindest teilweise fluidtechnisch zu sperren,
wobei der Ventilkolben (111) eine Wandungsaussparung (123) aufweist, welche dem Ventilgehäuse (101) zugewandt ist, und welche ausgebildet ist, zumindest eine der zumindest drei Gehäuseöffnungen (105, 105-1, 105-2, 105-3, 105-4) in Abhängigkeit einer Kolbenstellung des Ventilkolbens (111) zumindest teilweise fluidtechnisch freizugeben,
wobei die Kolbenaußenwand (119) durch einen ersten abgerundeten Wandungsrand (125) und zweiten abgerundeten Wandungsrand (127) von der Wandungsaussparung (123) abgegrenzt ist,
wobei sich der erste und zweite Wandungsrand (125, 127) jeweils zumindest abschnittsweise entlang einer Wandungsrandsachse (129) erstrecken, wobei sich die Wandungsrandsachse (129) winklig zur Drehachse (110) des Ventilkolbens (111) erstreckt, und
wobei der erste und zweite abgerundete Wandungsrand (125, 127) ausgebildet sind, bei einer Rotation des Ventilkolbens (111) über die zumindest eine Dichtungsanordnung (117, 117-1, 117-2, 117-3, 117-4) zu streichen.

2. Fluidverteilungsanordnung (100) nach Anspruch 1, wobei der Ventilkolben (111) eine Kolbeninnenwand (131) aufweist, welche die Kolbenunterseite (121) mit der Kolbenoberseite (112) verbindet, und welche sich von dem ersten abgerundeten Wandungsrand (125) zu dem zweiten abgerundeten Wandungsrand (127) erstreckt, wobei insbesondere die Kolbeninnenwand (131) der Wandungsaussparung (123) zugewandt ist, und mit dem Ventilgehäuse (101) einen fluidführenden Bereich (126) des Gehäuseinnenraums (103) begrenzt.

3. Fluidverteilungsanordnung (100) nach Anspruch 1 oder 2, wobei die Kolbenunterseite (121) einer unteren Bodenwand des Ventilgehäuses (101) zugewandt ist, wobei die Kolbenoberseite (112) eine Kolbenoberseiteninnenwand (135) aufweist, welche der unteren Bodenwand des Ventilgehäuses (101) zugewandt ist, und welche von der unteren Bodenwand des Ventilgehäuses (101) beabstandet ist, wobei insbesondere sich die Kolbeninnenwand (131) von dem ersten abgerundeten Wandungsrand (125) und von dem zweiten abgerundeten Wandungsrand (127) und von der Kolbenunterseite (121) zu der Kolbenoberseiteninnenwand (135) erstreckt.

4. Fluidverteilungsanordnung (100) nach Anspruch 1 oder 2, wobei die Kolbenunterseite (121) einer unteren Bodenwand des Ventilgehäuses (101) zugewandt ist, wobei die Kolbenoberseite (112) eine Kolbenoberseitenaussparung (166) aufweist, welche von der unteren Bodenwand des Ventilgehäuses (101) beabstandet ist, wobei insbesondere sich die Kolbeninnenwand (131) von dem ersten abgerundeten Wandungsrand (125) und von dem zweiten abgerundeten Wandungsrand (127) und von der Kolbenunterseite (121) zu einem Kolbenoberseitenwandrand (169) erstreckt, welcher die Kolbeninnenwand (131) von der Kolbenoberseitenaussparung (166) abgrenzt.

5. Fluidverteilungsanordnung (100) nach einem der vorangehenden Ansprüche, wobei der erste Wandungsrand (125) und der zweite Wandungsrand (127) jeweils einen mittleren Randbereich (139) aufweisen, welcher mit der Kolbenaußenwand (119), der Kolbenunterseite (121), der Kolbenoberseite (112), und insbesondere der Kolbeninnenwand (131) verbunden ist, wobei sich der mittlere Randbereich (139) entlang der Wandungsrandsachse (129) erstreckt.

6. Fluidverteilungsanordnung (100) nach einem der Ansprüche 1 bis 4, wobei der erste Wandungsrand (125) und der zweite Wandungsrand (127) jeweils einen unteren Randbereich (137), einen mittleren Randbereich (139) und einen oberen Randbereich (141) aufweisen,
wobei der untere Randbereich (137) mit der Kolbenaußenwand (119), der Kolbenunterseite (121) und dem mittleren Randbereich (139), und insbesondere der Kolbeninnenwand (131) verbunden ist,
wobei der obere Randbereich (141) mit der Kolbenaußenwand (119), der Kolbenoberseite (112), und dem mittleren Randbereich (139), und insbesondere der Kolbeninnenwand (131), verbunden ist,
wobei der mittlere Randbereich (139) mit der Kolbenaußenwand (119), dem unteren Randbereich (137), und dem oberen Randbereich (141), und insbesondere der Kolbeninnenwand (131) verbunden ist, wobei sich der mittlere Randbereich (139) entlang der Wandungsrandsachse (129) erstreckt.

7. Fluidverteilungsanordnung (100) nach einem der vorangehenden Ansprüche, wobei die Wandungsrandsachse (129) mit der Drehachse (110) des Ventilkolbens (111) einen Wandungswinkel (151) in einem Bereich zwischen 15° und 75°, insbesondere von 45° einschließt.

8. Fluidverteilungsanordnung (100) nach einem der vorangehenden Ansprüche, wobei der Ventilkoben (111) einen sich um die Drehachse (110) drehbaren Drehkolben (111-1) aufweist, wobei der Drehkolben (111-1) zumindest abschnittsweise innerhalb der Wandungsaussparung (123) angeordnet ist, insbesondere in einem durch die Körperinnenwand und durch das Ventilgehäuse (101) zumindest abschnittsweise geschlossenen fluidführenden Bereich (126) des Gehäuseinnenraums (103) angeordnet ist.

9. Fluidverteilungsanordnung (100) nach einem der vorangehenden Ansprüche, wobei das Ventilgehäuse (101) eine Oberseitenaussparung aufweist, welche dem Gehäuseinnenraum (103) zugewandt ist, wobei ein Drehkolben (111-1) des Ventilkolbens (111) durch die Oberseitenaussparung geführt ist, und wobei die Fluidverteilungsanordnung (100) eine Drehkolbendichtung aufweist, welche den Drehkolben (111-1) gegenüber der Oberseitenaussparung abdichtet.

10. Fluidverteilungsanordnung (100) nach einem der vorangehenden Ansprüche, wobei der Ventilkolben (111), insbesondere die Kolbeninnenwand (131), eine Ausbuchtung (153) aufweist, welche der Wandungsaussparung (123) zugewandt ist, wobei ein um die Drehachse (110) drehbarer Drehkolben (111-1) des Ventilkolbens (111) zumindest abschnittsweise in der Ausbuchtung (153) aufgenommen ist.

11. Fluidverteilungsanordnung (100) nach einem der vorangehenden Ansprüche, wobei in einer unteren Bodenwand des Ventilgehäuses (101) eine Aufnahmeöffnung zur Aufnahme eines unteren Endes (155) eines um die Drehachse (110) drehbaren Drehkolbens (111-1) des Ventilkolbens (111) geformt ist.

12. Fluidverteilungsanordnung (100) nach einem der vorangehenden Ansprüche, wobei die zumindest eine Dichtungsanordnung (117, 117-1, 117-2, 117-3, 117-4) ein Dichtungselement (161) mit einer Dichtungslippe (163) aufweist, wobei die Dichtungslippe (163) an einem Öffnungsrand (109) der jeweiligen Gehäuseöffnung (105, 105-1, 105-2, 105-3, 105-4) des Ventilgehäuses (101) umlaufend innerhalb des Gehäuseinnenraums (103) angeordnet ist, und wobei der erste und zweite Wandungsrand (125, 127) ausgebildet sind, bei einer Rotation des Ventilkolbens (111) über die jeweiligen Dichtungslippe (163) zu streichen.

13. Fluidverteilungsanordnung (100) nach einem der vorangehenden Ansprüche, wobei die Dichtungsanordnungen (117, 117-1, 117-2, 117-3, 117-4) jeweils ein Befestigungselement (165) und ein Dichtungselement (161) aufweisen, wobei das jeweilige Befestigungselement (165) an einer Innenwand (123) der jeweiligen Fluidführung (107, 107-1, 107-2, 107-3, 107-4) anliegt und ausgebildet ist, das jeweilige Dichtungselement (161) mit einer Kraft zu beaufschlagen, um das jeweilige Dichtungselement (161) an einen jeweiligen Öffnungsrand (109) der jeweiligen Gehäuseöffnung (105, 105-1, 105-2, 105-3, 105-4) des Ventilgehäuses (101) zu pressen und eine fluidtechnische Abdichtung zwischen dem Ventilkolben (111) und einem jeweiligen Öffnungsrand (109) der jeweiligen Gehäuseöffnung (105, 105-1, 105-2, 105-3, 105-4) zu bewirken.

14. Fluidverteilungsanordnung (100) nach Anspruch 13, wobei das jeweilige Dichtungselement (161) der jeweiligen Dichtungsanordnung (117, 117-1, 117-2, 117-3, 117-4) als ein Zweikomponentenbauteil geformt ist, umfassend ein erstes Dichtungselementbauteil, welches an dem jeweiligen Öffnungsrand (109) der jeweiligen Gehäuseöffnung (105, 105-1, 105-2, 105-3, 105-4) des Ventilgehäuses (101) anliegt, und umfassend ein zweites Dichtungselementbauteil, welches an dem jeweiligen Befestigungselement (165) der jeweiligen Dichtungsanordnung (117, 117-1, 117-2, 117-3, 117-4) anliegt.

15. Fluidverteilungsanordnung (100) nach einem der vorangehenden Ansprüche, wobei die Fluidverteilungsanordnung (100) einen Gehäusedeckel (115) aufweist, welcher mit dem Ventilgehäuse (101) fluiddicht, insbesondere stoffschlüssig verbunden ist, wobei insbesondere die in dem Ventilgehäuse (101) geformten Fluidführungen (107, 107-1, 107-2, 107-3, 107-4) jeweils eine offene Fluidführungsoberseite (108) aufweisen, welche durch jeweils eine obere Fluidwandungskontur (106) des Gehäusedeckels (115) fluiddicht verschlossen wird.
